# EUROPEAN PATENT SPECIFICATION

(11) **EP 2 671 487 B1**
(45) Date of publication and mention of the grant of the patent: **07.03.2018**
(21) Application number: 13150172.8
(22) Date of filing: 03.01.2013
(51) Int. Cl.: A47J 43/28, A47G 21/10

(54) **Locking arrangement and culinary utensil comprising same**
Sperranordnung und kulinarer Gegenstand damit
Dispositif de verrouillage et ustensile culinaire comprenant celui-ci

(30) Priority: 08.06.2012 US 201213491770; 09.10.2012 US 201213647537
(43) Date of publication of application: 11.12.2013
(73) Proprietor: Maxpat Trading & Marketing (Far East) Limited, Kowloon, Hong Kong (CN)
(72) Inventor: LV, Bing Yuan, Kowloon, Hong Kong (CN)
(74) Representative: Smaggasgale, Gillian Helen

(56) References cited:
- EP-A1- 2 564 747
- CN-U- 202 184 551
- DE-C- 455 286
- US-A- 2 864 645
- US-A- 6 092 847
- US-A1- 2008 054 661
- US-B1- 7 316 434

## Description

### FIELD OF THE INVENTION

The present invention is concerned with a locking arrangement and a utensil comprising such arrangement; the invention is in particular concerned with but not limited to a culinary utensil comprising such arrangement. The culinary utensil may be a pair of tongs or clamp.

### BACKGROUND OF THE INVENTION

There are a variety of conventional tong- or clamp-like utensils for picking up an object. In the context of culinary utensils, for example a pair of culinary tongs, the tongs may be used for picking up food objects. Such utensils typically would have a pair of arms or extensions connected together at a pivot joint. A biasing means may be provided to bias the arms to a far apart configuration. In use, when a food object is to be picked up the arms are firstly allowed to be spread apart. The utensil is positioned such that the front ends of the arms sandwich the food object and then the arms are squeezed together so as to engage with the food object. In order to maintain the position of the food object between the arms, the arms have to be held firmly together by the fingers and the palm of a user. This can be difficult in particular if the means for biasing the arms apart are particularly strong because the fingers and the palm would have to act against the biasing force of the biasing means. The holding of the arms together would be particularly difficult if the food object being held is heavy or slippery or the food object is to be held for a prolonged period of time.

Another problem with conventional tong- or clamp-like utensils is that when they are not in use, the arms are biased to spread apart. As such, the utensils become larger and difficult to stow. One solution has been for example to provide a ring for holding the arms together. However, the ring can be difficult to maneuver and is generally not reliable and it is not aesthetically pleasant either.

Known prior art includes DE 455286 C which relates to a utensil for picking up eggs and CN 202184551 U which discloses a food clip with an automatic lock, comprising a main clip handle, a secondary clip handle and a clip head connected with the main clip handle and the secondary clip handle, wherein the main clip handle and the secondary clip handle are concave; the intersection of the tail ends of the main clip handle and the secondary clip handle is provided with a spring and the main clip handle is riveted with the secondary clip handle through a rivet; a control piece for opening or closing the main clip handle and the secondary clip handle is arranged on the main clip handle; and the control piece is movably arranged in the arc position of the main clip handle so as to buckle with the bayonet of the secondary clip handle.

US 2008/054661 A1 is also known and discloses a pair of serving tongs comprising two tong limbs which are connected to each other in a manner such that they can pivot relative to each other about a pivot axis and are designed at their front ends for grasping food products, a spring in order to prestress the tong limbs into an open position of the pair of serving tongs, and a locking mechanism in order to lock the tong limbs counter to the prestress of the spring in a closed position of the pair of serving tongs. The first tong limb comprises an elongated hole in which a locking pin is moveably guided, and a locking cam is provided on the second tong limb and, in the locked closed position of the pair of serving tongs, comes into contact with the locking pin.

US 2864645 A discloses a pair of tongs having a locking means which may function automatically to lock the tong arms together, where this structure may operate by gravity so that if the tongs are held in an upright position with their pivoted arms extending downwardly, the tong arms will lock together when pressed together.

US 6092847 A discloses a set of locking tongs comprising a first arm and a second arm each comprising a hinge end and a grasping end. Hinge members are provided for pivotably connecting the first and second arms together at the hinge ends, so that the arms can pivot between an open position and closed position. Spring members are included for biasing the arms in an open position. The locking member comprises a captured pin attached to the first arm and an aperture member attached to the second arm. The captured pin has a pin that moves under the effects of gravity within a contained range of motion, limited by a bracket. The second arm has an aperture located on a surface. When the tongs are held in an attitude such that gravity can act upon the pin, the pin will engage the aperture and prevent the tongs from opening. The outward force applied by the spring acts to retain the pin in its locked position through frictional forces thus resisting opening. When the arms are depressed thereby relieving the force felt by the sides of the pin against the aperture, and oriented such that the pin can move under the affect gravity, the lock may be disengaged.

Additionally, prior art document EP 2564747 A1 discloses a locking arrangement and a utensil comprising such arrangement having a first wall defining a surface and a second wall defining a surface with the surfaces abutting each other. The first wall is provided with a first bulge defining a first elongate groove facing a first direction and the second wall is provided with a second bulge defining a second elongate groove facing a second direction opposite to the first direction, and the grooves are positioned to define a channel in which a ball bearing is movable there across. The first groove has a substantially same width there across and the second groove has a narrower end and a wider end, the locking arrangement is adapted to, depending on the orientation of the channel, assume a first configuration in which the ball bearing is positioned at one end of the channel or a second configuration in which the ball bearing is positioned at the opposite end of the channel.

US 7316434 B1 also teaches a locking utensil, where the utensil has a pair of pivoting spring-loaded arms each having a forward functional end and a rear attachment end. The utensil includes a locking assembly, featuring an eccentrically shaped cam disposed in a channel between the arms. One side of the cam has a projecting shoulder dimensioned to frictionally engage an inside surface of the channel when the shoulder side of the cam is rocked into contact with the inside surface. The cam can releasably retain the arms closed to lock them. An actuator tab that extends out of the channel is used to rock the cam into and out of locking engagement.

It may be possible to introduce an actuation lock so that on pressing, sliding or pulling of a switch thereof the arms can be locked to stay close together. However, the working of such switch can be adversely interfered when the utensil is used to pick with food objects with grease or sauce. The grease or sauce can hinder working of moving
parts or the switch. Further, maneuvering food with such utensil and controlling locking or unlocking of the arms simultaneously can be difficult.

The present invention seeks to address the above problems or at least to provide an alternative to the public.

### SUMMARY OF THE INVENTION

According to a first aspect of the present invention as defined in claim 1, there is provided a locking arrangement for locking two movable parts together or unlocking the two movable parts from each other, comprising a) a first member having a front end and a rear end, b) a second member having a front end and a rear end, the first member and the second member are connected together at a first pivot axis at the rear ends thereof, c) a front portion, and d) a rear portion including a locking mechanism for controlling configuration of the arrangement, characterized in that, the locking mechanism includes a pivotable member and a guide for controlling movement of the pivotable member, and wherein the arrangement is configured to assume a first configuration in which the pivotable member is engaged in a first position due to orientation of the arrangement such that the first member and the second member are locked against each other from movement, or a second configuration in which the pivotable member having been disengaged from the first position, or engaging or engaged in the second position, due to orientation of the apparatus such that the first member and the second member are movable relative to each other.

According to a second aspect of the present invention, there is provided a tong or clamp apparatus comprising a locking arrangement as described above, wherein a) the front end of the first member is in the form of a first elongate arm, b) the front end of the second member is in the form of a second elongate arm, the first elongate arm and the second elongate arm are pivotably connected together at the first pivot axis, c) the front ends of the first and second members form a utility portion, and d) the locking mechanism resides in a rear end of the apparatus for controlling configuration of the apparatus, wherein the guide acts to restrict movement of the pivotable member, and wherein in the first configuration the first and second arms are locked against each other from movement; and in the second configuration the first arm and the second arm are movable relative to each other.

Preferably, the pivotable member may be in the form of a lever and the guide defines a region at which the lever is movable within a range of distance of the region. In an embodiment, when the apparatus is oriented with the utility portion downwardly pointing and the rear portion upwardly pointing, the lever is positioned above the first pivot axis.

In one embodiment, the lever may be pivotably connected at the rear portion of the apparatus and/or the rear end of the first member is provided with an end plate at the far end of the apparatus to which the lever is pivotably connected. The lever may be pivotably movable at a second pivot axis substantially parallel to the first pivot axis. The lever may be pivotably connected to the end plate via a protrusion member extending from the end plate. The lever may be relatively thin and generally resembles a plate.

Advantageously, the rear end of the second member may include the guide, and the region of the guide at which the lever moves in use may be elongate and arch shaped and provided with a first end and a second end, the first end and the second end disposed on opposite sides of the elongate guide.

The lever may be generally elongate in shape and acts as a stopper, such that, when a distal end of the lever acts on the guide the first member and the second member are locked against each other to prevent relative movement thereof.

The lever may generally resemble the English letter "T" or inverted "T".

In one embodiment, in the first configuration, the apparatus may be adapted to hold an object between the first and second arms, and in the second configuration the apparatus is adapted to arrange with the object positioned between the first and second arms or to release the object from the apparatus.

The rear end of the apparatus may be configured to resemble a socket defining a cavity for containing the locking mechanism, and the pivotable member and the guide are concealed in the socket from the surroundings at least visually.

In one embodiment, the apparatus, excluding the guide, the first member and the second member may be free of means or moving parts for engaging the pivotable member in position.

The apparatus may be a pair of culinary tongs.

According to a third aspect of the present invention, there is provided a tong or clamp apparatus for picking up an object, comprising a) a first member having a front end in the form of a first elongate arm and a rear end, b) a second member having a front end in the form of a second elongate arm and a rear end, the first member and the second member are pivotably connected together at a first pivot axis, c) a utility portion, and d) a rear portion including a locking mechanism for controlling configuration of the apparatus, wherein the locking mechanism includes i) a lever pivotably connected to the apparatus and adapted to take a swinging course between a first position and a second position, in that in the first position the first arm and the second arm may be locked together and in the second position the first arm and the second arm are allowed to be freely movable relative to each other and ii) a guide defining a region at which the lever is movable within a range of distance, and wherein the apparatus is configured to assume 1) a first configuration in which the lever is engaged in the first position due to orientation of the apparatus and the effect of gravity on the lever such that the first arm and the second arm are locked against each other from movement, and 2) a second configuration in which the lever having been disengaged from the first position, or engaging or engaged in the second position, due to orientation of the apparatus and the effect of gravity on the lever such that the first arm and the second arm are movable relative to each other.

According to a fourth aspect of the present invention, there is provided a tong or clamp apparatus for picking up an object, comprising a) a first member having a front end in the form of a first elongate arm and a rear end, b) a second member having a front end in the form of a second elongate arm and a rear end, the first elongate arm and the second elongate arm are pivotably connected together at a first pivot axis, c) a utility portion, and d) a rear portion including a locking mechanism for controlling configuration of the apparatus, wherein the locking mechanism includes a pivotable member and a guide for restricting movement of the pivotable member, and wherein the apparatus is configured to assume i) a first configuration in which the pivotable member is engaged in a first position due to orientation of the apparatus such that the first member and the second member are locked against each other from movement, and ii) a second configuration in which the pivotable member having been disengaged from the first position, or engaging or engaged in the second position due to orientation of the apparatus such that the first member and the second member are movable relative to each other.

According to a fifth aspect of the present invention, there is provided a locking arrangement for locking two movable parts together or unlocking the two movable parts from each other, comprising a) a first member having a front end and a rear end, b) a second member having a front end and a rear end, the first member and the second member are connected together at a first pivot axis at the rear ends thereof, c) a front portion, and d) a rear portion including a locking mechanism for controlling configuration of the arrangement, wherein the locking mechanism includes a pivotable member and a guide for controlling movement of the pivotable member, wherein the arrangement is configured to assume i) a first configuration in which the pivotable member is engaged in a first position due to orientation of the arrangement such that the first member and the second member are locked against each other from movement or ii) a second configuration in which the pivotable member having been disengaged from the first position, or engaging or engaged in the second position, due to orientation of the apparatus and the effect of gravity on the pivotable member such that the first member and the second member are movable relative to each other; and wherein the pivotable member acts as a stopper such that when the pivotable member acts on the guide the first member and the second member are locked against each other to prevent relative movement thereof.

According to a sixth aspect of the present invention, there is provided a locking arrangement for locking two movable parts together or unlocking the two movable parts from each other, comprising a) a first member having a front end and a rear end, b) a second member having a front end and a rear end, the first member and the second member are connected together at a first pivot axis at the rear ends thereof, c) a front portion, and d) a rear portion including a locking mechanism for controlling configuration of the arrangement, wherein the locking mechanism includes a pivotable member and a guide for controlling movement of the pivotable member, and wherein the arrangement is configured to assume i) a first configuration in which the pivotable member is engaged in a first position due to orientation of the arrangement such that the first member and the second member are locked against each other from movement or ii) a second configuration in which the pivotable member having been disengaged from the first position, or engaging or engaged in the second position, due to orientation of the apparatus and the effect of gravity on the pivotable member such that the first member and the second member are movable relative to each other.

### BRIEF DESCRIPTION OF DRAWINGS

Some embodiments of the present invention will now be explained, with reference to the accompanied drawings, in which:-
Fig. 1 is a schematic side view showing a first embodiment of a pair of culinary tongs disposed in a certain configuration according to the present invention;
Fig. 2 is a schematic side view of the culinary tongs in Fig. 1 but showing tongs in another configuration;
Fig. 3 is another schematic side view of the culinary tongs of Fig. 2 but showing more details of the tongs;
Fig. 4a is a schematic cross section view of a rear end of the culinary tongs taken at A-A' of Fig. 3;
Fig. 4b is schematic cross section view showing a portion of Fig. 4a;
Fig. 5 is another schematic side view showing the culinary tongs of Fig. 2; and
Fig. 6 is a schematic side view showing a second embodiment of a pair culinary tongs disposed in a certain configuration according to the present invention;
Fig. 7 is a side view showing the culinary tongs of Fig. 6;
Fig. 8 generally corresponds to Fig. 6 but showing the tongs disposed in an alternative (locked) configuration and more details of the tongs;
Fig. 9 corresponds to Fig. 8 but showing another side view thereof;
Fig. 10 is an end view of the tongs of Fig. 6;
Fig. 11 is a perspective view schematically illustrating half of the tongs shown in Fig. 6;
Fig. 12 is a perspective view similarly schematically illustrating half of the tongs shown in Fig. 6 but disposed in an alternative (locked) configuration;
Fig. 13 is an enlarged perspective view showing locking mechanism of the tongs of Figs. 6 and 11 disposed in an unlocked configuration; and
Fig. 14 is an enlarged perspective view showing the locking mechanism of the tongs of Figs. 8 and 12 disposed in a locked configuration.

### DETAILED DESCRIPTION OF PREFERRED EMBODIMENTS OF THE INVENTION

The present invention is concerned with a locking arrangement, a locking mechanism or a locking structure, and a utensil comprising such an arrangement, mechanism or structure. The use of terms "arrangement", "mechanism" and "structure" hereinafter is interchangeable.

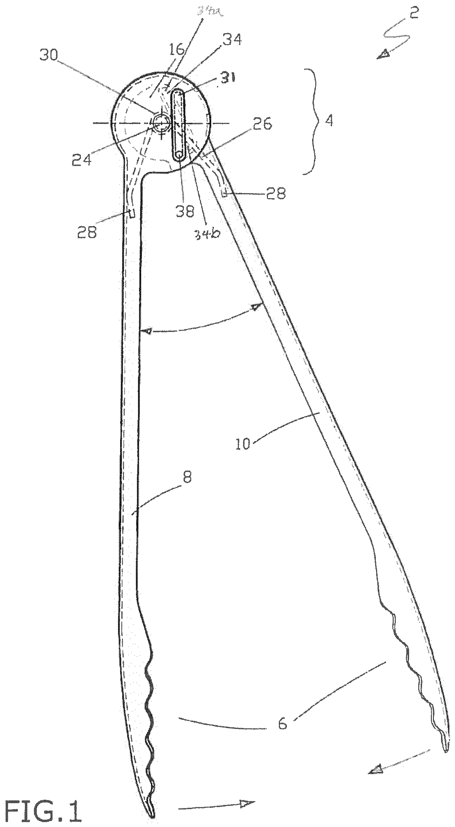

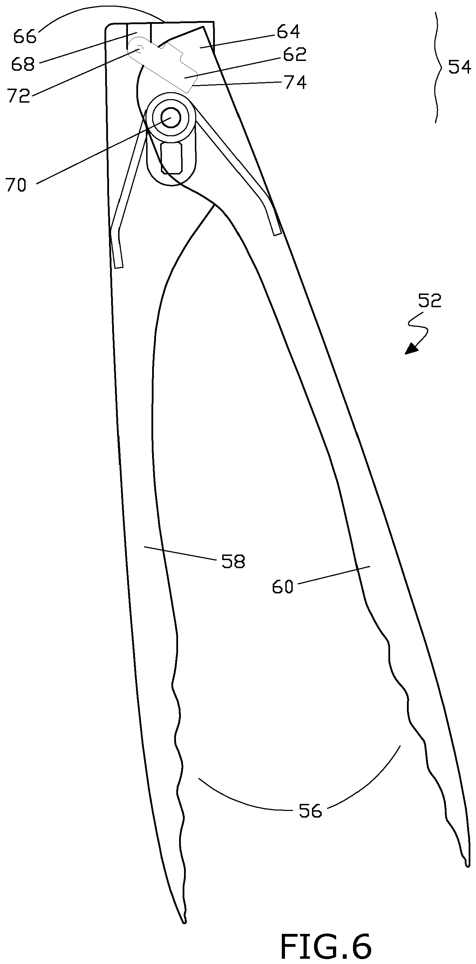

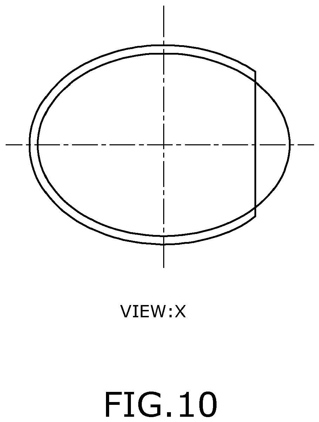

Figs. 1 to 5 and the corresponding description below depict embodiments which are not part of the claimed invention and are provided for comparison purpose; while Figs. 6-14 and corresponding description below depict embodiments which are part of the claimed invention.

Fig. 1 is a schematic view of a pair of culinary tongs, generally designated 2, according to an embodiment of the present invention. This schematic view depicts an image of the tongs 2 when viewed from a side thereof although the interior construction of a joint and a locking arrangement of the tongs 2 located at its rear portion 4 are also depicted schematically.

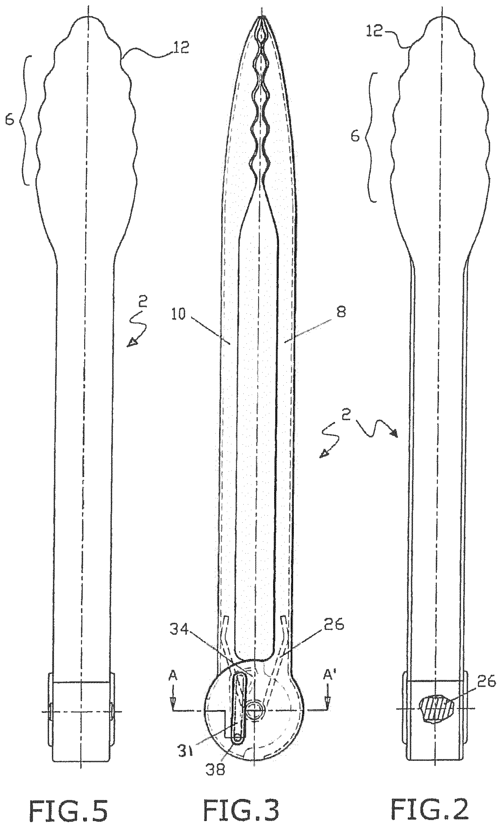

The tongs 2 comprise a front portion or a utility portion 6 having a first arm 8 and a second arm 10. The first arm 8 and the second arm 10 are made of stainless steel plates which have been stamped to conform to a particular shape and curvature. Specifically, in this embodiment, the arms 8, 10 have a predetermined wider front end 12 (also shown in Figs. 2 and 5) which facilitates picking up of a food object. The corrugated edging at the front end 12 of the arms 8, 10 also facilitates the picking up of a food object.

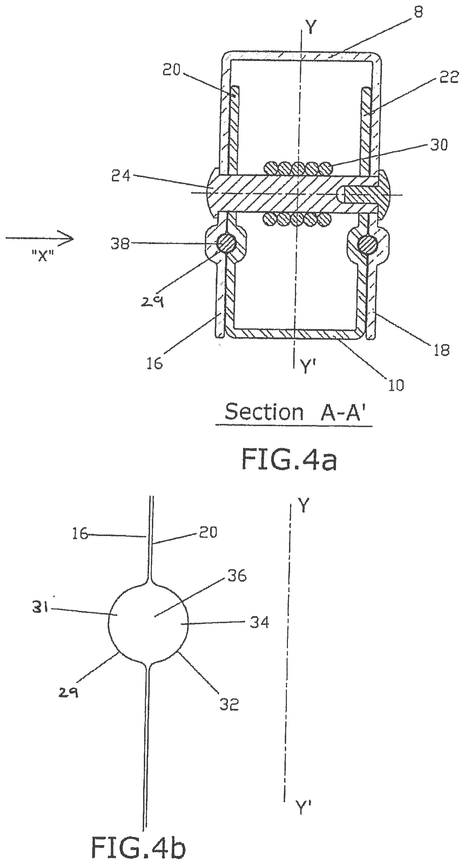

The rear portion 4 of the tongs 2 serves as a handle onto which a user grasps in use. The rear portion 4 contains a construction in which a locking mechanism resides. The rear portion 4 of the first arm 8 has a pair of flange-like walls or plates 16, 18 (see also Fig. 4a) arranged on opposite lateral sides thereof. In this embodiment, the walls 16, 18 are generally circular in profile, as shown in Figs. 1 and 3. The rear portion 4 of the second arm 10 similarly has a pair of walls or plate 20, 22 (see Fig. 4a) arranged on opposite lateral sides thereof. The rear portion 4 of the tongs 2 is configured such that the walls 20, 22 of the second arm 10 are sandwiched by the walls 16, 18 of the first arm 8.

The first arm 8 and the second arm 10 are pivotably connected together by a pivot pin 24 extending from one lateral side thereof to the opposite side and defining a pivot axis, as shown in Figs. 1 to 5. With the pivot pin 24, it is to be understood that the first arm 8 and the second arm 10 are pivotably movable relative to each other at the pivot pin 24 within a predetermined range, as shown by the arrows in Fig. 1. The first arm 8 and the second arm 10 while being movable relative to each other cannot spread apart beyond the predetermined range when rear edges of the first arm 8 and the second arm 10 abut each other.

The tongs 2 are provided with means for biasing the first arm 8 and the second arm 10 away from each other. In this embodiment, the biasing means takes the form of a wire spring 26 with a shape generally resembling the English letter "V". Please see Figs. 1, 2 and 3. The wire spring 26 has two legs 28 and a spring coil 30. The two legs 28 abut an inner surface of the rear end of the first arm 8 and an inner surface of the rear end of the second arm 10, respectively. Due to the inherent biasing nature of the wire spring 26, the arms 8, 10, in the absence of other interference, are biased away from each other, as shown in Fig. 1. As can be seen from the figures and in particular Fig. 4a, the pivot pin 24 extends through the walls 16, 20, the spring coil 30 of the wire spring 26 and the walls 22, 18.

Referring to Figs. 4a and 4b, the tongs 2 are provided with the locking arrangement which serves to control the locking status thereof. The locking arrangement makes use of the walls 16, 18 of the first arm 8 and the walls 20, 22 of the second arm 10. Each wall 16, 18 of the first arm 8 is configured such that there is provided a bulge 29. In this embodiment, when the tongs 2 are viewed from the side designated by "X" in Fig. 4a, the bulge 29 resembles a protrusion. However, it is to be understood from Figs. 4a-b that the opposite side of the bulge 29 takes the form of a groove 31. The groove 31 is elongate in shape and has a substantially equal width, and extends from a rear part of the wall 16 to a front part of the wall 16. The elongate groove 31 generally defines a longitudinal axis which is generally in parallel to the longitudinal axis of the first arm 8.

The walls 20, 22 of the second arm 10 is configured such that there is also provided with a similar bulge 32 defining a protrusion on one side (outwardly facing side) and a groove 34 on the opposite side (inwardly facing side). The difference between the bulge 28 of the wall 16 of the first arm 8 and the adjacent bulge 32 of the wall 20 of the second arm 10 is that the protrusion of the bulge 28 of the first arm 8 points away from the tongs 2 (or a central axis Y-Y') while the protrusion of the bulge 32 of the second arm 10 points into the tongs 2 (or towards the central axis Y-Y'). In other words, the surface of the wall 16 of the first arm 8 defining the groove 31 is inwardly facing (towards the central axis Y-Y') while the surface of the wall 20 of the second arm 10 defining the groove 34 is outwardly facing (away from the central axis Y-Y'). It is to be noted that the meaning of "outwardly" and "inwardly" used herein merely serves to designate the relative orientation and does not limit the meaning to a particular orientation.

As shown in Fig. 4b, the grooves 31, 34 of the walls 16, 20 together define a channel 36 for accommodating a movable member, e.g. a ball bearing 38 in this embodiment.

Referring to Figs. 1 and 3, it is however to be noted that the grooves 31, 34 are different in a further aspect. While the groove 31 of the first wall 16 is elongate in shape with a generally equal width along its length, the groove 34 of the second wall 20 is also elongate is shape but with a narrower rear end 34a and a wider front end 34b. The wider front end 34b of the groove 34, as shown in Figs. 1 and 2, resembles a fan shaped configuration. Despite the different configurations of the grooves 31, 34, the grooves 31, 34 are however positioned adjacent each other and together they define the channel 36 for accommodating the ball bearing 38 which is movable therein. The ball bearing 38 is sized to fit and slidable therein, and it would not fall out of the channel 36. In this embodiment, the channel 36 is enclosed for accommodating the ball bearing 38. One advantage of this enclosed configuration is to minimize interference on the operation of the ball bearing 38. It is also to be noted that the channel 36 extends across the pivot axis of the pivot joint. As shown in Fig. 4a, in this embodiment the left rear portion of the tongs 2 is generally symmetrical to that of the right rear portion of the tongs 2. The working of the locking arrangement is now explained as follows.

Fig. 1 illustrates a first configuration of the tongs 2 in which the arms 8, 10 are not locked against movement relative each other. In this configuration, the tongs 2 are oriented with the front portion 6 or the arms 8, 10 pointing towards the ground and the rear portion 4 pointing upwardly. In other words, the front portion 6 is situated below the pivot pin 24 or the channel 36. By situating below, it means the front portion is situated at a level which is below the level of the pivot pin 24 or the channel 36. It can be seen that due to gravity the ball bearing 38 is positioned at the lowest end of the channel 36 or a forward end of the channel 36 and the arms 8, 10 are biased apart by the wire spring 26. As long as the ball bearing 38 stays in this lowest or forward position in the channel 36, the arms 8, 10 can be brought together freely by squeezing thereof. When the squeezing action is removed the arms 8, 10 return to a biased spread apart configuration. This is because in this configuration the ball bearing 38 is situated in a position which is out of the path of relative movement of the walls. It means that when the tongs 2 are oriented with the front portion 6 situated below the channel 36 and a food object is situated between the front end of the arms 8, 10, the arms 8, 10 can be brought together with a squeeze, or when the action of the squeeze is removed the food object can be released. In other words, in this orientation, food can be picked up or released freely because the locking arrangement is not activated.

Fig. 3 illustrates a second configuration of the tongs 2 in which the arms 8, 10 are brought close to and adjacent each other and they are locked against movement relative each other. In this configuration, the tongs 2 are oriented with the front portion 6 or the arms 8, 10 pointing away from the ground and the rear portion 4 pointing downwardly. In other words, the front end 6 of the arms 8, 10 is situated above the channel 36. It can be seen that the ball bearing 38 is positioned at the other end (or the opposite end) or the rear end of the channel 36 and the arms 8, 10 stay close together despite the biasing action of the spring 26. This is because the ball bearing 38 is situated in a location in the channel 36 where it blocks the relative movement of the walls 16, 20. As long as the ball bearing 38 stays in this rear or back position (e.g. when the arms are upwardly pointing) in the channel 36 due to gravity to the ball bearing 28, the arms 8, 10 cannot be spread apart. This is because the ball bearing 38 is located in the path of relative movement of the walls 8, 10. This configuration is suitable when a food object is being held between the arms 8, 10 or when the tongs 2 have been stowed away. In this orientation, food can be held between the arms 8, 10 because the locking arrangement has been activated. It is to be understood that the tongs 2 do not have to point upwardly and vertically to effect the locking status. As long as the front portion of the tongs 2 is situated above the channel, the same locking status can be achieved. The locking can be released by orienting the tongs 2 such that the front end 6 of the tongs 2 point downwardly or when the front end 6 is situated below the channel 36. With this orientation, the front end 6 of the tong 2 is situated below the channel 36, and a slight squeeze of the arms 8, 10 can unlock the locking mechanism. This is because when the orientation is changed accordingly and the arms 8, 10 are slightly squeezed together, the ball bearing 38 is released and becomes movable within the channel 36. By gravity the ball bearing 38 rolls from the rear end of the channel 36 to the front end of the channel 36.

In this embodiment, the arms 8, 10 are adapted to be locked in a position half way between a fully spread apart position and a fully closed position. This is achieved by squeezing or bringing and holding the arms 8, 10 to a desired relative position and then orienting the tongs 2 such that the arms 8, 10 point upwardly to the extent that the front portion 6 is situated above the channel 36. Once this is done the desired relative position of the arms 8, 10 can be maintained with, for example, the food object held between the arms 8, 10 until the locking arrangement is unlocked.

In this embodiment, each of the first arm 8, the second arm 10, the groove 31 and the groove 34 generally defines a longitudinal axis. In the second configuration, the longitudinal axis of the first arm 8 and the longitudinal axis of the groove 31 or in the second configuration the longitudinal axis of the first arm 6 and the longitudinal axis of the second groove are generally in parallel with each other. In alternative embodiments, this is not necessarily so in that the grooves or the channel may be positioned differently in relation to the arms. In such other embodiments, the locking or unlocking of the locking arrangement is however still determined by the orientation of the channel or the position of the ball bearing. When the ball bearing is positioned in a location or an end of the channel due to gravity where movement of the walls are blocked by the ball bearing the locking arrangement is in its locked position. On the other hand, when the ball bearing is positioned in a location or an (the other) end of the channel (e.g. having a groove with a widened width) the walls are not blocked the locking arrangement is in its unlocked position.

In the above embodiment, the locking arrangement has two pair of walls and two ball bearings in that one wall from each pair of walls and the respective ball bearing act as a locking mechanism. In other words, there are two parallel locking mechanisms on opposite sides of thereof. However, in an alternative embodiment a similar locking arrangement may be provided in which only one pair of adjacent walls and one ball bearing is provided. Such alternative embodiment would also work.

It is envisaged that the above described locking arrangement has only one moving part, i.e. the ball bearing. Manipulation of the moving part is effected by merely positioning the utensil in a certain orientation. The ball bearing is enclosed in a channel not easily accessible by, for example, grease, sauce, etc. The channel effectively serves as an enclosed chamber to insulate the ball bearing from the surroundings. Thus, there is a minimal chance that the arrangement would malfunction.

Figs. 6-14 illustrate an embodiment of a pair of culinary tongs according to the present invention. The tongs, generally designed 52, are similar to the tongs 2 in some ways but are different in others. The following illustration focuses on the differences between the tongs 52 and the tongs 2.

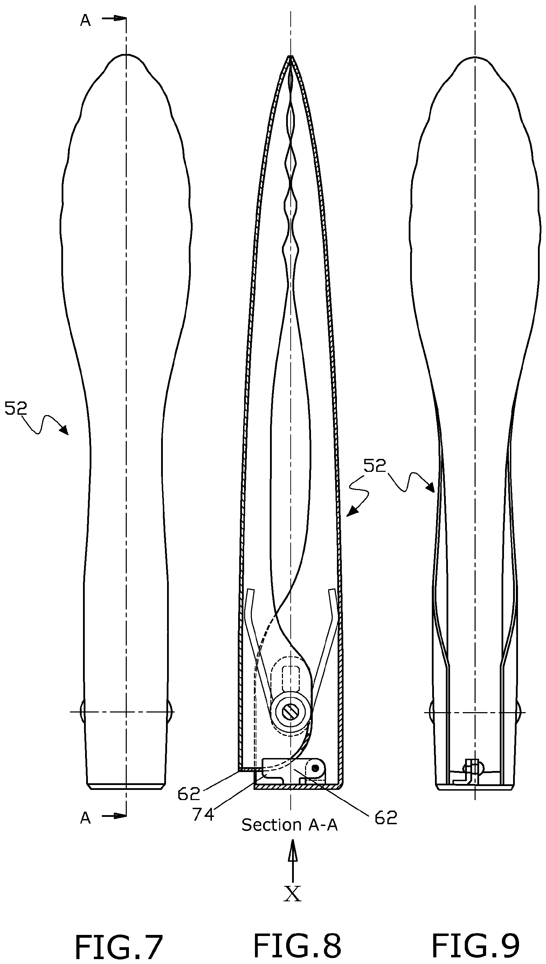

Referring in particular to Fig. 6, the tongs 52 similarly comprise a utility portion 56 at the front and a rear portion 54, and have a pair of members connected at the rear portion at a first pivot axis. The front ends of the members resemble a first arm 58 and a second arm 60, respectively. The arms 58, 60 are likewise biased by default by an expansion means to a far apart configuration. A rear end of the second arm 60 is partly received in a rear end of the first arm 58. The tongs 52 are configured in a way such that in the far apart configuration an end region of the second arm end 60 abuts an end region of the first arm 58 so as to limit the extent of the spreading of the two members. The tongs 52 comprise a locking mechanism similar to the locking mechanism of the tongs 2 in that both locking mechanisms operate in response to the orientation of the tongs or in response to the effect of gravity on a movable element in the tongs. There are however differences. Specifically, in this embodiment, the locking mechanism includes a pivotable member in the form of a lever 62 and a guide 64 which cooperates with the lever 62. The rear end of the first member is provided with a generally planar end plate 66 at the far end of the tong from which a connection member 68 in the form of a protrusion depends towards the first pivot axis 70. In this embodiment, the lever 62 is generally elongate in profile and is provided with one end pivotably joined to the connection member 68 at a second pivot axis 72. The attachment of the lever 62 to the end plate is particularly advantageous because this attachment location allows the lever 62 to respond more sensitively, and accordingly locking or unlocking of the apparatus becomes more responsive. The opposite end of the lever, or a distal end 74, is configured to engage with the guide 64 and acts as a stopping means for maintaining the tongs 52 in a locked configuration. (Please see Fig. 8) In this embodiment, the second pivot axis 72 and the first pivot axis 70 generally are arranged in parallel to each other. Due to the pivotable joint at the second pivot axis 72, the lever 62 is movable in a swinging course from one side to another.

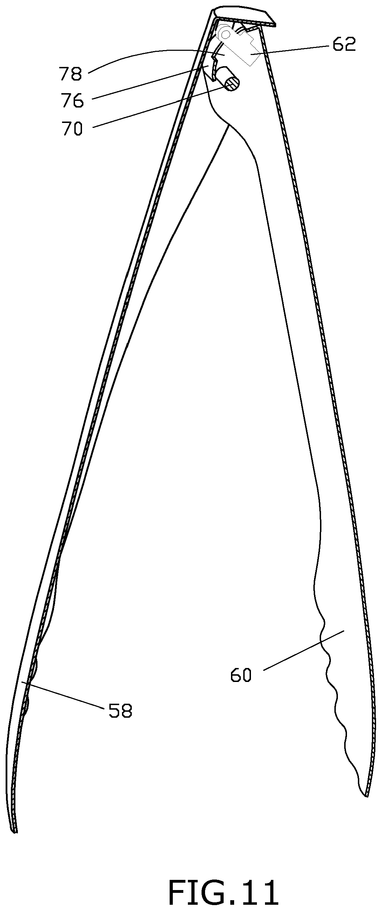

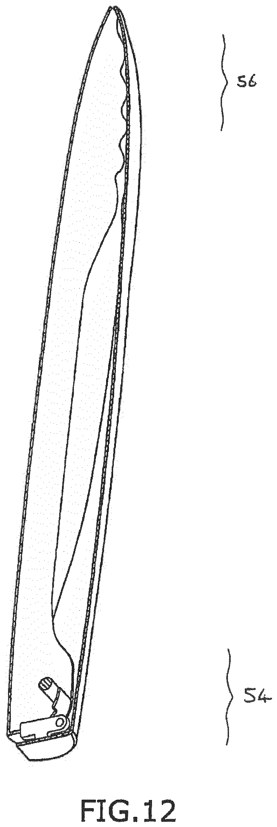

Referring to Figs. 11 and 12, the guide 64 of the locking mechanism is configured to take the form of a curved plate 76 defining a concave facing the second pivot axis 74. The plate 76 is provided with an elongate slot 78 at a centre region thereof. The plate 76 is formed from the rear end of the second arm 60 and is positioned such that the elongate slot 78 forms an opening within which the lever 62 is movable in a swinging and reciprocating manner in use.

Figs. 6 and 11 illustrate a configuration in which the arms 58, 60 of the tongs 52 are biased to spread apart. In this configuration, the rear portion 54 is upwardly positioned and the front portion 56 is downwardly positioned. Accordingly, due to this particular orientation of the tongs 52, the distal end of the lever 74 moves or is movable away from the end plate 66 of the first member, disengages from the guide 64 and moves towards the first pivot axis 70 in response to the effect of gravity on the lever 62. Once the lever 62 has disengaged from the guide 64, the first arm 58 and the second arm 60 are freely squeezable towards each other or biased away from each other as long as the tongs 52 maintains this orientation. In other words, the tongs 52 have assumed an unlocked configuration. It can be envisaged that in this configuration an object can be picked up and held between the arms. If the tongs 52 in a locked configuration are oriented with the rear portion 54 upwardly positioned and the front portion 56 downwardly positioned, a slight squeeze of the arms 58, 60 together will disengage the lever 62 from the guide 64 and allow it to move away towards the first pivot axis, thus unlocking the arms 58, 60 from each other.

Figs. 8 and 12 illustrate a different configuration in which the arms 58, 60 of the tongs 52 are squeezed together. In this configuration, the rear portion 56 is downwardly positioned and the front portion 54 is upwardly positioned. It can be seen in Fig. 8 that due to the biasing action of the expansion means the distal end 74 of the lever 62 engages and presses against the guide 64. According, the arms 58, 60 of the tongs 52 are locked against each other. As long as the tongs 52 maintain this configuration the tongs 52 will stay in this locked configuration. The tongs 52 will continue to stay locked even when the tongs 52 are turned upside down; however, a slight squeeze of the arms can overcome the locking of the arms 58, 60.

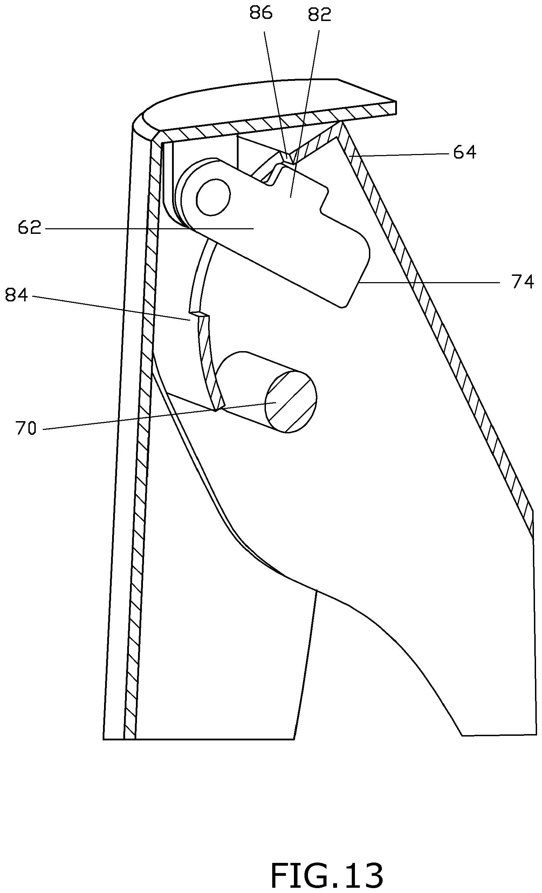

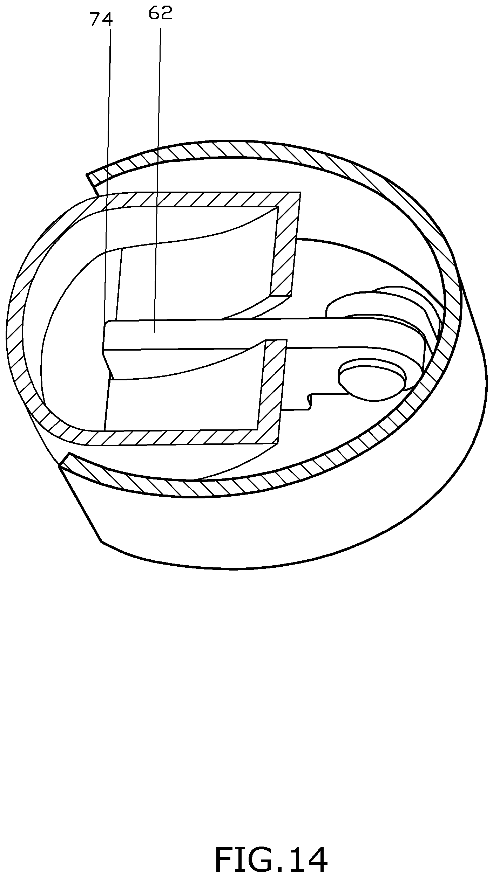

Figs. 13 and 14 illustrate the locking mechanism in greater detail. From these figures, it is clearly shown that the lever 62 is relatively thin and has an elongate profile defining a longitudinal axis. The lever 62 is provided with an extension 82 perpendicularly protruding away from the longitudinal axis. In other words, the lever 62 generally resembles a plate in the form of an English letter "T", or inverted "T" when the tongs 52 are positioned in opposite orientation. The extension 82 of the lever 62 serves to align the lever 82 in a predetermined position such that it can engage with the guide 64. The elongate slot 78 has two opposite ends, namely a first end 84 arranged closer to the first pivot axis 70 and a second end 86 arranged closer to the end plates of the first and second members. In Fig. 13, it is shown that when the distal end 74 of the lever 62, in response to the orientation of the tongs 52, moves towards to the first end 84 of the slot 78 or the first pivot axis 70 and disengages from the guide 64 at the second end 86 of the slot 78, the first member 58 and the second member 60 become freely squeezable together or spreadable away from each other. This is because the lever 62 no longer engages with the guide 64 or restricts movement of the second arm 60. In Fig. 14, it is shown that when the distal end 74 of the lever 62, in response to the orientation of the tongs 52 and when the arms 58, 60 have been squeezed together, moves away from the first pivot axis 70 and engages with the guide 64, the first member 58 and the second member 60 become locked against each other.

It is to be understood that the working of both the tongs 2 shown in Fig. 1 and the tongs 52 shown in Fig. 6 can be achieved in a one-hand operation.

It should be understood that certain features of the invention, which are, for clarity, described in the content of separate embodiments, may be provided in combination in a single embodiment. Conversely, various features of the invention which are, for brevity, described in the content of a single embodiment, may be provided separately or in any appropriate sub-combinations. It is to be noted that certain features of the embodiments are illustrated by way of non-limiting examples. For example, while the movable member as depicted in one of the embodiments may be a lever, any pivotable member adapted to be movable in response to orientation of the apparatus may be usable. Also, a skilled person in the art will be aware of the prior art which is not explained in the above for brevity purpose.

## Claims

1. A tong or clamp apparatus (52) comprising a locking arrangement for locking two movable parts together or unlocking the two movable parts from each other, comprising:-
a) a first elongate member (58) having a front end and a rear end;
b) a second elongate member (60) having a front end and a rear end, the first member (58) and the second member (60) are connected together at a first pivot axis (70) at the rear ends thereof;
c) a utility portion (56) located at a front end of the apparatus; and
d) a handle portion located at a rear end (54) of the apparatus (58), the rear end (54) including a locking mechanism for controlling configuration of the arrangement;
**characterized in that** the locking mechanism includes a pivotable member (62) and a guide (64) for controlling movement of the pivotable member (62), and the arrangement is configured to assume:
i) a first configuration in which the pivotable member (62) is engaged in a first position due to orientation of the arrangement such that the first member (58) and the second member (60) are locked against each other from movement; or
ii) a second configuration in which the pivotable member (52) having been disengaged from the first position, or engaging or engaged in the second position, due to orientation of the apparatus (52) such that the first member (58) and the second member (60) are movable relative to each other; and
iii) the pivotable member (52) is pivotably movable at a second pivot axis substantially parallel to the first pivot axis.

2. An apparatus (52) as claimed in Claim 1, wherein:-
a) the front end of the first member (58) is in the form of a first elongate arm;
b) the front end of the second member (60) is in the form of a second elongate arm;
c) the front ends of the first and second members (58, 60) together form the utility portion (56); and
d) the locking mechanism resides in the rear end (54) of the apparatus (52) adjacent the first pivot axis for controlling configuration of the apparatus (52); and
wherein the guide (64) acts to restrict movement of the pivotable member (62); and
wherein in the first configuration the first and second arms are locked against each other from movement; and in the second configuration the first arm and the second arm are movable relative to each other.

3. An apparatus (52) as claimed in Claim 2, wherein the pivotable member (62) is in the form of a lever and the guide (64) defines a region at which the lever is movable within a range of distance of the region.

4. An apparatus (52) as claimed in Claim 3, wherein, when the apparatus (52) is oriented with the utility portion (56) downwardly pointing and the rear end (54) upwardly pointing, the lever is positioned above the first pivot axis.

5. An apparatus (52) as claimed in Claim 3 or 4, wherein the lever is pivotably connected at the rear end (54) of the apparatus (52) and/or the rear end of the first member (58) is provided with an end plate (66) at the far end of the apparatus (52) to which the lever is pivotably connected.

6. An apparatus (52) as claimed in Claim 5, wherein the lever is pivotably connected to the end plate (66) via a protrusion member (68) extending from the end plate (66).

7. An apparatus (52) as claimed in any of Claims 3 to 6, wherein the lever is relatively thin and generally resembles a plate.

8. An apparatus (52) as claimed in any of Claims 3 to 7, wherein the rear end of the second member includes the guide (64), and the region of the guide (64) at which the lever moves in use is elongate and arch shaped and provided with a first end and a second end, the first end and the second end are disposed on opposite sides of the elongate guide.

9. An apparatus (52) as claimed in Claim 8, wherein the lever is generally elongate in shape and acts as a stopper, such that, when a distal end of the lever acts on the guide (64) the first member (58) and the second member (60) are locked against each other to prevent relative movement thereof.

10. An apparatus (52) as claimed in any of Claims 3 to 9, wherein the lever generally resembles the English letter "T" or inverted "T".

11. An apparatus (52) as claimed in any of Claims 2 to 10, wherein in the first configuration, the apparatus (52) is adapted to hold an object between the first and second arms (58, 60), and in the second configuration the apparatus (52) is adapted to arrange with the object positioned between the first and second arms (58, 60) or to release the object from the apparatus.

12. An apparatus (52) as claimed in any of Claims 2 to 11, wherein the rear end (54) of the apparatus (52) is configured to resemble a socket defining a cavity for containing the locking mechanism, and the pivotable member (62) and the guide (64) are concealed in the socket from the surroundings at least visually.

13. An apparatus (52) as claimed in any of Claims 2 to 12, wherein, excluding the guide (64), the first member (58) and the second member (60) are free of means or moving parts for engaging the pivotable member (62) in position.

14. An apparatus (52) as claimed in Claim 1, wherein the apparatus (52) is a pair of culinary tongs.

## Patentansprüche

1. Zangen- oder Klemmvorrichtung (52), umfassend eine Sicherungsanordnung zum Sichern von zwei bewegbaren Teilen aneinander oder Entsichern der zwei bewegbaren Teile voneinander, umfassend:
a) ein erstes längliches Element (58) mit einem vorderen Ende und einem hinteren Ende;
b) ein zweites längliches Element (60) mit einem vorderen Ende und einem hinteren Ende, wobei das erste Element (58) und das zweite Element (60) an einer ersten Schwenkachse (70) an den hinteren Enden davon miteinander verbunden sind;
c) einen Gebrauchsabschnitt (56), der sich an einem vorderen Ende der Vorrichtung befindet; und
d) einen Griffabschnitt, der sich an einem hinteren Ende (54) der Vorrichtung (58) befindet, wobei das hintere Ende (54) einen Sicherungsmechanismus zum Steuern der Konfiguration der Anordnung beinhaltet;
**dadurch gekennzeichnet, dass** der Sicherungsmechanismus ein schwenkbares Element (62) und eine Führung (64) zum Steuern der Bewegung des schwenkbaren Elements (62) beinhaltet und die Anordnung konfiguriert ist, Folgendes einzunehmen:
i) eine erste Konfiguration, in der das schwenkbare Element (62) aufgrund der Ausrichtung der Anordnung in einer ersten Position eingegriffen ist, sodass das erste Element (58) und das zweite Element (60) gegen Bewegung aneinander gesichert sind; oder
ii) eine zweite Konfiguration, in der das schwenkbare Element (52) aufgrund der Ausrichtung der Vorrichtung (52) aus der ersten Position gelöst worden ist oder in der zweiten Position zum Eingriff kommt oder in der zweiten Position eingegriffen ist, sodass das erste Element (58) und das zweite Element (60) relativ zueinander bewegbar sind; und
iii) das schwenkbare Element (52) ist an einer zu der ersten Schwenkachse im Wesentlichen parallelen zweiten Schwenkachse schwenkbar bewegbar.

2. Vorrichtung (52) nach Anspruch 1, wobei:
a) das vordere Ende des ersten Elements (58) die Form eines ersten länglichen Arms aufweist;
b) das vordere Ende des zweiten Elements (60) die Form eines zweiten länglichen Arms aufweist;
c) die vorderen Enden des ersten und zweiten Elements (58, 60) zusammen den Gebrauchsabschnitt (56) bilden; und
d) der Sicherungsmechanismus in dem hinteren Ende (54) der Vorrichtung (52) neben der ersten Schwenkachse zum Steuern der Konfiguration der Vorrichtung (52) untergebracht ist; und
wobei die Führung (64) dahingegen wirkt, die Bewegung des schwenkbaren Elements (62) zu beschränken; und
wobei in der ersten Konfiguration der erste und der zweite Arm gegen Bewegung aneinander gesichert sind; und in der zweiten Konfiguration der erste Arm und der zweite Arm relativ zueinander bewegbar sind.

3. Vorrichtung (52) nach Anspruch 2, wobei das schwenkbare Element (62) die Form eines Hebels aufweist und die Führung (64) eine Region definiert, in der der Hebel innerhalb eines Abstandsbereichs der Region bewegbar ist.

4. Vorrichtung (52) nach Anspruch 3, wobei, wenn die Vorrichtung (52) so ausgerichtet ist, dass der Gebrauchsabschnitt (56) nach unten zeigt und das hintere Ende (54) nach oben zeigt, der Hebel über der ersten Schwenkachse positioniert ist.

5. Vorrichtung (52) nach Anspruch 3 oder 4, wobei der Hebel an dem hinteren Ende (54) der Vorrichtung (52) schwenkbar verbunden ist und/oder das hintere Ende des ersten Elements (58) an dem Ende der Vorrichtung (52) ganz hinten mit einer Endplatte (66) versehen ist, mit der der Hebel schwenkbar verbunden ist.

6. Vorrichtung (52) nach Anspruch 5, wobei der Hebel über ein Vorsprungselement (68), das sich von der Endplatte (66) erstreckt, schwenkbar mit der Endplatte (66) verbunden ist.

7. Vorrichtung (52) nach einem der Ansprüche 3 bis 6, wobei der Hebel relativ dünn ist und im Allgemeinen einer Platte ähnelt.

8. Vorrichtung (52) nach einem der Ansprüche 3 bis 7, wobei das hintere Ende des zweiten Elements die Führung (64) beinhaltet und die Region der Führung (64), in der sich der Hebel in Gebrauch bewegt, länglich und bogenförmig ist und mit einem ersten Ende und einem zweiten Ende versehen ist, wobei das erste Ende und das zweite Ende an gegenüberliegenden Seiten der länglichen Führung angeordnet sind.

9. Vorrichtung (52) nach Anspruch 8, wobei der Hebel im Allgemeinen eine längliche Form aufweist und als Stopper wirkt, sodass, wenn ein distales Ende des Hebels auf die Führung (64) wirkt, das erste Element (58) und das zweite Element (60) aneinander gesichert sind, um eine relative Bewegung davon zu verhindern.

10. Vorrichtung (52) nach einem der Ansprüche 3 bis 9, wobei der Hebel im Allgemeinen dem englischen Buchstaben "T" oder umgekehrten "T" ähnelt.

11. Vorrichtung (52) nach einem der Ansprüche 2 bis 10, wobei in der ersten Konfiguration die Vorrichtung (52) angepasst ist, um ein Objekt zwischen dem ersten und dem zweiten Arm (58, 60) zu halten, und in der zweiten Konfiguration die Vorrichtung (52) angepasst ist, um sich nach dem zwischen dem ersten und dem zweiten Arm (58, 60) positionierten Objekt auszurichten oder das Objekt aus der Vorrichtung freizugeben.

12. Vorrichtung (52) nach einem der Ansprüche 2 bis 11, wobei das hintere Ende (54) der Vorrichtung (52) konfiguriert ist, um einer Aufnahme zu ähneln, die einen Hohlraum definiert, um den Sicherungsmechanismus zu fassen, und das schwenkbare Element (62) und die Führung (64) mindestens visuell in der Aufnahme vor der Umgebung verdeckt sind.

13. Vorrichtung (52) nach einem der Ansprüche 2 bis 12, wobei mit Ausnahme der Führung (64), das erste Element (58) und das zweite Element (60) frei von Mitteln oder Bewegungsteilen zum Eingreifen des schwenkbaren Elements (62) in Position sind.

14. Vorrichtung (52) nach Anspruch 1, wobei die Vorrichtung (52) ein Kochzangenpaar ist.

## Revendications

1. Appareil de pince ou de serrage (52) comprenant un agencement de verrouillage pour verrouiller deux parties mobiles ensemble ou déverrouiller les deux parties mobiles l'une de l'autre, comprenant :-
a) un premier élément allongé (58) ayant une extrémité avant et une extrémité arrière ;
b) un deuxième élément allongé (60) ayant une extrémité avant et une extrémité arrière, le premier élément (58) et le deuxième élément (60) sont raccordés ensemble au niveau d'un premier axe de pivotement (70) au niveau des extrémités arrière de ceux-ci ;
c) une partie utilitaire (56) située au niveau d'une extrémité avant de l'appareil ; et
d) une partie poignée située au niveau d'une extrémité arrière (54) de l'appareil (58), l'extrémité arrière (54) incluant un mécanisme de verrouillage pour contrôler la configuration de l'agencement ;
**caractérisé en ce que** le mécanisme de verrouillage inclut un élément capable de pivoter (62) et un guide (64) pour contrôler le mouvement de l'élément capable de pivoter (62), et l'agencement est configuré pour prendre :
i) une première configuration dans laquelle l'élément capable de pivoter (62) est engagé dans une première position en raison de l'orientation de l'agencement de sorte que le premier élément (58) et le deuxième élément (60) sont verrouillés l'un contre l'autre pour ne pas pouvoir effectuer de mouvement ; ou
ii) une deuxième configuration dans laquelle l'élément capable de pivoter (52) ayant été désengagé de la première position, ou en cours d'engagement ou engagé dans la deuxième position, en raison de l'orientation de l'appareil (52) de sorte que le premier élément (58) et le deuxième élément (60) sont mobiles l'un par rapport à l'autre ; et
iii) l'élément capable de pivoter (52) est mobile de manière à pouvoir pivoter au niveau d'un deuxième axe de pivotement substantiellement parallèle au premier axe de pivot.

2. Appareil (52) selon la revendication 1, dans lequel :-
a) l'extrémité avant du premier élément (58) est sous la forme d'un premier bras allongé ;
b) l'extrémité avant du deuxième élément (60) est sous la forme d'un deuxième bras allongé ;
c) les extrémités avant des premier et deuxième éléments (58, 60) forment ensemble la partie utilitaire (56) ; et
d) le mécanisme de verrouillage réside dans l'extrémité arrière (54) de l'appareil (52) adjacent au premier axe de pivotement pour contrôler la configuration de l'appareil (52) ; et
dans lequel le guide (64) agit pour limiter le mouvement de l'élément capable de pivoter (62) ; et
dans lequel dans la première configuration les premier et deuxième bras sont verrouillés l'un contre l'autre pour ne pas pouvoir effectuer de mouvement ; et dans la deuxième configuration le premier bras et le deuxième bras sont mobiles l'un par rapport à l'autre.

3. Appareil (52) selon la revendication 2, dans lequel l'élément capable de pivoter (62) est sous la forme d'un levier et le guide (64) définit une région au niveau de laquelle le levier est mobile au sein d'une plage de distance de la région.

4. Appareil (52) selon la revendication 3, dans lequel, quand l'appareil (52) est orienté avec la partie utilitaire (56) pointant vers le bas et l'extrémité arrière (54) pointant vers le haut, le levier est positionné au-dessus du premier axe de pivotement.

5. Appareil (52) selon la revendication 3 ou 4, dans lequel le levier est raccordé de manière à pouvoir pivoter au niveau de l'extrémité arrière (54) de l'appareil (52) et/ou l'extrémité arrière du premier élément (58) est pourvue d'une plaque d'extrémité (66) au niveau de l'extrémité éloignée de l'appareil (52) à laquelle le levier est raccordé de manière à pouvoir pivoter.

6. Appareil (52) selon la revendication 5, dans lequel le levier est raccordé de manière à pouvoir pivoter à la plaque d'extrémité (66) par un élément formant saillie (68) s'étendant depuis la plaque d'extrémité (66).

7. Appareil (52) selon l'une quelconque des revendications 3 à 6, dans lequel le levier est relativement étroit et ressemble de manière générale à une plaque.

8. Appareil (52) selon l'une quelconque des revendications 3 à 7, dans lequel l'extrémité arrière du deuxième élément inclut le guide (64), et la région du guide (64) au niveau de laquelle le levier se déplace pendant l'utilisation est allongée et de forme arquée et pourvue d'une première extrémité et d'une deuxième extrémité, la première extrémité et la deuxième extrémité sont disposées sur les côtés opposés du guide allongé.

9. Appareil (52) selon la revendication 8, dans lequel le levier est de forme allongée de manière générale et agit comme un butoir, de sorte que, quand une extrémité distale du levier agit sur le guide (64) le premier élément (58) et le deuxième élément (60) sont verrouillés l'un contre l'autre pour prévenir le mouvement relatif de ceux-ci.

10. Appareil (52) selon l'une quelconque des revendications 3 à 9, dans lequel le levier ressemble de manière générale à la lettre anglaise « T » ou un « T inversé ».

11. Appareil (52) selon l'une quelconque des revendications 2 à 10, dans lequel dans la première configuration, l'appareil (52) est conçu pour tenir un objet entre les premier et deuxième bras (58, 60), et dans la deuxième configuration l'appareil (52) est conçu pour s'agencer avec l'objet positionné entre les premier et deuxième bras (58, 60) ou pour libérer l'objet de l'appareil.

12. Appareil (52) selon l'une quelconque des revendications 2 à 11, dans lequel l'extrémité arrière (54) de l'appareil (52) est configurée pour ressembler à un culot définissant une cavité pour contenir le mécanisme de verrouillage, et l'élément capable de pivoter (62) et le guide (64) sont dissimulés des alentours dans le culot au moins visuellement.

13. Appareil (52) selon l'une quelconque des revendications 2 à 12, dans lequel, à l'exception du guide (64), le premier élément (58) et le deuxième élément (60) sont exempts de moyens ou de pièces mobiles pour engager l'élément capable de pivoter (62) en position.

14. Appareil (52) selon la revendication 1, dans lequel l'appareil (52) est une paire de pinces culinaires.
